# EUROPÄISCHE PATENTSCHRIFT

(11) **EP 1 203 927 B1**
(45) Veröffentlichungstag und Bekanntmachung des Hinweises auf die Patenterteilung: **11.08.2004**
(21) Anmeldenummer: 01125802.7
(22) Anmeldetag: 29.10.2001
(51) Int. Cl.: G01B 11/275

(54) **Verfahren und Vorrichtung zum Erfassen der Position eines Fahrzeugrades in einem fahrzeugfesten Bezugssystem**
Method and device for detecting the position of a vehicle wheel in a reference system linked to the vehicle
Méthode et dispositif pour détecter la position d'une roue de véhicule dans un système de référence lié au véhicule

(30) Priorität: 02.11.2000 DE 10054189
(43) Veröffentlichungstag der Anmeldung: 08.05.2002
(73) Patentinhaber: TÜV Automotive GmbH Unternehmensgruppe TÜV Süddeutschland, 80339 München (DE)
(72) Erfinder: Schick, Bernhard, 76199 Karlsruhe (DE)
(74) Vertreter: Kramer - Barske - Schmidtchen

(56) Entgegenhaltungen:
- DE-A- 4 419 584
- DE-C- 4 212 426
- US-A- 4 928 175
- US-A- 5 724 743
- US-A- 6 134 792

## Beschreibung

Die Erfindung betrifft ein Verfahren und eine Vorrichtung zum Erfassen der Position eines Fahrzeugrades in einem fahrzeugfesten Bezugssystem.

Die genaue messtechnische Erfassung von Veränderungen der Position der Fahrzeugräder innerhalb eines fahrzeugfesten Bezugssystem eines fahrenden Fahrzeugs ist eine wichtige Voraussetzung für die Entwicklung von Fahrzeugen mit sicherem und seine Lenker vor keine Probleme stellendem Fahrverhalten.

Ein übliches Messgerät ist ein sogenannter Autokollimator, mit dem Spur -und Sturzwinkel dynamisch im Fahrbetrieb erfasst werden kann. Ein solcher Autokollimator enthält einen starr am Fahrzeugrad angebrachte Spiegel, dessen reflektiertes Licht von einem auch optisches System erfasst wird, das an einem mit dem Fahrzeug verbundenen Gestell angebracht ist. Sowohl die Größe als auch das Gewicht solcher Messgeräte beeinflussen das Fahrverhalten des Fahrzeugs und ermöglichen keine präzise messtechnische Erfassung der durch die Fahrzeug- bzw. Achskonstruktion bedingten Änderungen der Radstellung bei äußeren Einflüssen, wie Seitenkräften usw.

Eine weitere Erfassungseinrichtung der Position eines Fahrzeugrader ist in US A 6 134 792 offenbart.

Der Erfindung liegt die Aufgabe zugrunde, ein Verfahren und eine Vorrichtung zu schaffen, mit der im praktischen Fahrbetrieb die Stellung bzw. Position eines Fahrzeugrades in einem fahrzeugfesten Bezugssystem präzise erfasst werden kann, ohne dass das Fahrzeug verhalten durch die Messtechnik beeinflusst wird.

Der auf das Verfahren gerichtete Teil der Erfindungsaufgabe wird mit den Merkmalen des Anspruchs 1 gelöst.

Bei dem erfindungsgemäßen Verfahren können die Positionen der beiden Erfassungselemte als Positionen von Bildelementen nach üblichen Bildauswertverfahren (Punktermittlung und -verfolgung) bestimmt werden. Dabei können Auswertverfahren verwendet werden, wie sie beispielsweise in Entwicklungen zur Verbesserung der passiven Unfallsicherheit (Crashforschung) üblich sind. Dadurch, dass die Position der Erfassungselemente in zwei unterschiedlichen Ebenen erfasst wird, ist eine dreidimensionale Bestimmung ihrer Position in einem fahrzeugfesten Bezugssystem möglich. Die starre geometrischen Zuordnung zwischen den Erfassungselementen und dem Fahrzeugrad erlaubt unmittelbar die Berechnung der Position des Fahrzeugrades in dem fahrzeugfesten Bezugssystem, beispielsweise hinsichtlich der kartesischen Koordinaten der Mitte der Radachse und des Raumwinkels der Radachse, d. h. hinsichtlich der sechs Freiheitsgrade, die die Position des Fahrzeugrades eindeutig beschreiben.

Der Anspruch 2 kennzeichnet den grundsätzlichen Aufbau der Vorrichtung zur Lösung des diesbezüglichen Teils der Erfindungsaufgabe.

Die Unteransprüche 3 bis 6 sind auf vorteilhafte Ausführungsformen und Weiterbildungen der erfindungsgemäßen Vorrichtung gerichtet.

Die Erfindung kann überall dort eingesetzt werden, wo die Position eines Fahrzeugrades in einem fahrzeugfesten Bezugssystem präzise ermittelt werden soll, sowohl bei stehendem Fahrzeug als auch bei fahrendem Fahrzeug.

Die Erfindung wird im folgenden anhand schematischer Zeichnungen beispielsweise und mit weiteren Einzelheiten erläutert.

Es stellen dar:
- Fig. 1: eine perspektivische Ansicht schräg von oben eines Fahrzeugrades mit daran angebrachter Vorrichtung,
- Fig. 2: eine schematische senkrechte Schnittansicht durch das Fahrzeugrad mit daran angebrachter Vorrichtung und ein Blockschaltbild weiterer Komponenten und
- Fig. 3: ein gegenüber Fig. 2 abgeändertes Blockschaltbild.

Gemäß den Figuren ist an einem Fahrzeugrad 2 ein Messkörper 4 derart befestigt, dass er mit der Achse A-A fluchtet, um die das Fahrzeugrad 2 drehbar ist. Diese Achse ist gleichzeitig die Achse eines Achsschenkels 6, an dem ein Radträger 8 drehbar gelagert ist, an dem wiederum das Fahrzeugrad 2 befestigt ist. Der Achsschenkel 6 ist an einem Lenker 10 ausgebildet, der an einem Achsträger oder Rahmenteil 12 des Fahrzeugs schwenkbar angebracht ist.

Der Messkörper 4 ist insgesamt hantelförmig und weist zwei Kugeln 14,16 auf, die über einen Stab 18 starr miteinander verbunden sind. Der Stab 18 ist über die Kugel 16 hinaus verlängert und an der Felge des Rades 2 oder dem Radträger 8 derart befestigt, dass der Messkörper 4 mit der Achse A-A ausgerichtet ist. Die Befestigung des Messkörpers 4 am Rad 2 oder dem Radträger 8 kann in unterschiedlichster Weise erfolgen, beispielsweise kann der Messkörper 4 mit Armen ausgebildet sein, die mit den Radschrauben (nicht dar dargestellt) befestigt werden, die das Rad an dem Radträger 8 halten. Der Messkörper 4 kann auch derart ausgebildet sein, dass er in eine zentrale Ausnehmung des Ratträger 8 einschiebbar und darin zentriert befestigbar ist, beispielsweise mittels eines Gewindes.

An der Fahrzeugkarosserie 19 ist eine erste Kamera 20 derart starr befestigt, dass sich ihre Linse etwa senkrecht über der Mitte zwischen den Kugeln 14 und 16 befindet, wobei das Gesichtsfeld der Kamera den gesamten Bereich überdeckt, innerhalb dessen sich der Messkörper 4 bewegt. Für den Fall, dass das Rad 2 ein lenkbares Vorderrad des Fahrzeugs ist, befindet sich die Kamera 20 etwa senkrecht über dem Messkörper 4, wenn das Vorderrad nicht eingeschlagen ist.

Eine weitere Kamera 22 ist vor (oder hinter) dem Messkörper 4 in einer die Achse A-A enthaltenden Ebenen derart montiert, dass sie sich etwa mittig vor (bzw. hinter) dem Messkörper 4 befindet. Die Kameras 20 und 22 sind elektronische Kameras (beispielsweise CCD oder CMOS ), deren die Bildfläche bildende, lichtempfindliche Elemente über Datenleitungen 24,26 mit einem Computer 28 verbunden sind. Wenigstens ein Eingang 30 des Computers ist mit einem Fahrzustandssensor 32, beispielsweise einen Geschwindigkeitssensor, Lenkwinkelsensor oder ähnlichem verbunden. Ausgänge 34 des Computers führen zu Peripheriegeräten, wie Displays, Druckern usw.

Die Funktion der beschriebenen Vorrichtung ist wie folgt:

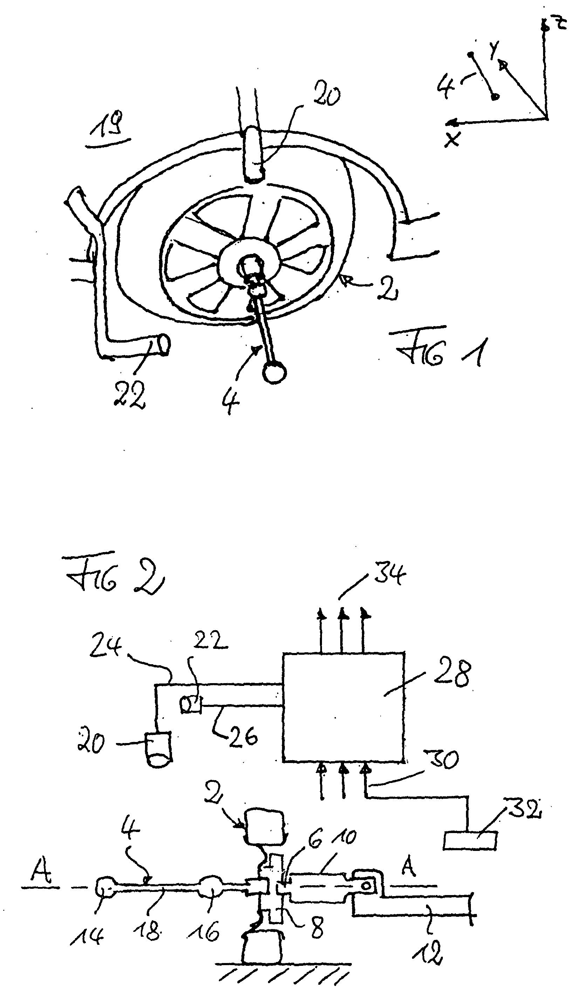

Die Kugeln 14, 16 werden von jeder Kamera 20, 22 als Scheiben abgebildet, sodass durch elektronische Bildauswertung eine genaue Bestimmung der Mittelpunkte der Scheiben möglich ist. In Figur 1 ist ein fahrzeugfestes Bezugssystem eingezeichnet, wobei die X-Achse in Fahrzeuglängsrichtung, die Y-Achse in Fahrzeugbreitenrichtung und die Z-Achse in Hochrichtung des Fahrzeugs zeigt. Weiter ist der Messkörper 4 mit den beiden Kugeln angedeutet. Wie unmittelbar verständlich, sind mit Hilfe der Kamera 20 und Bildauswertung im Computer 28 die x und y Koordinaten der Kugeln in einem fahrzeugfesten Bezugssystem bestimmbar. Ähnlich sind mit der Kamera 22 die y und z Koordinaten bestimmbar. Aus den dreidimensionalen Koordinaten der beiden Kugeln und der festen geometrischen Beziehung zwischen dem Messkörper 4 und dem Rad 2 können die dreidimensionalen Koordinaten beispielsweise der Mitte der Felge des Rades 2 und die Winkel berechnet werden, die die Achse A-A mit den Koordinatenachsen bildet. Somit ist es möglich, durch Auswertung der Bilder der beiden Kameras 20, 22 in dem Computer 28 die Position zu bestimmen, die das Rad 2 in dem fahrzeugfesten Koordinatensystem bezüglich seiner sechs Freiheitsgrade einnimmt.

Bei fahrenden Fahrzeug verändert sich die durch die sechs Freiheitsgrade gegebene Position des Rades 2 im fahrzeugfesten Koordinatensystem entsprechend den wirkenden Kräften und ggfs. dem Lenkwinkel laufend. Durch Nutzung rascher Bildauswerte- und Punktverfolgungsverfahren, wie sie beispielsweise in der Crash-Technik zur Verfolgung von auf dem Fahrzeug aufgebrachten Markierungspunkten eingesetzt werden, ist es möglich, die Koordinaten der Mittelpunkte der beiden Kugeln 14 und 16 auszuwerten und aufzuzeichnen. Dabei ist es hilfreich, zeitgleich die Ausgangsignale wenigstens eines Fahrzustandssensors 32 aufzuzeichnen, damit Veränderungen der Position des Fahrzeugrades mit äußeren Einflüssen korrellierbar sind.

Mit dem beschriebenen System werden die Fahreigenschaften des Fahrzeugs praktisch nicht verändert, da die Masse des Messkörpers 4 gegenüber der des Rades 2 vernachlässigbar ist. Auch die Kameras 20 und 22 können kompakt und gewichtsgünstig ausgebildet sein, wobei deren Befestigung an der Karosserie 19 möglichst starr ist. Um etwaige Positionsveränderungen oder Schwingungen zu berücksichtigen, kann an der Fahrzeugkarosserie 19 zusätzlich eine in das Gesichtsfeld der Kameras einragende Markierung befestigt werden, deren Lage relativ zur Karosserie sich auch bei starken Beschleunigungen nicht verändert.

Das beschriebene System kann auf vielfältige Weise ausgeführt und abgeändert werden:

Der Messkörper 4 muss nicht zwangsläufig mit zwei Kugeln ausgebildet sein ; die Kugeln erleichtern zwar die Bildauswertung bezüglich der Identifizierung ihres Mittelpunktes; die Kugeln könnten jedoch auch Scheiben ausgebildet sein oder als Ringnuten des Stabes 18. Wesentlich ist, dass der Messkörper 18 mit zwei Erfassungselementen (im dargestellten Beispiel Kugeln) ausgebildet ist, die derart geformt sind, dass die Flächenmittelpunkte ihrer Schnittflächen, geschnitten in der Achsebene, unabhängig von der Drehstellung der Achse auf der Achse liegen. Dies ermöglicht eine präzise Ermittlung relevanter Koordinaten des Messkörpers. Der Messkörper kann zur besseren Erfassbarkeit mittels einer nicht dargestellten Einrichtung beleuchtbar sein, vorteilhafterweise mit einem Wellenlängenbereich, für den die Kameras besonders empfindlich sind.

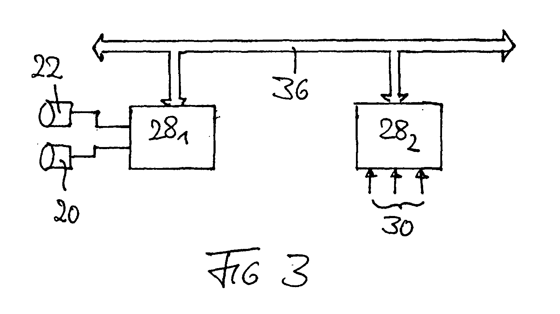

Der Rechner 28 kann gem. Fig. 3 "dezentralisiert" werden, indem beispielsweise eine einen Rechner enthaltende Steuereinheit 28₁ für die Kameras vorgesehen wird, die mit einem Messrechner 28₂ und weiteren, nicht dargestellten Komponenten über ein Bussystem 36 (z.B. CAN oder IEEE 1394) verbunden ist. Auf diese Weise wird ein Zentralrechner entlastet und können die einzelnen Rechner an ihre Aufgaben spezifisch angepasst werden. In der Steuereinheit 28₁ erfolgt nicht nur die Ansteuerung der Kameras, sondern vorteilhafterweise auch die Bildauswertung, wobei den Daten zur Ermöglichung späterer zeit- oder ereignisbezogener Auswertungen Zeitmarken zugefügt werden.

Vorteilhaft ist, nicht den gesamten, von den Kameras aufgenommenen Bildbereich auszuwerten, sondern nur diejenigen bereiche, in denen sich die Kugeln befinden. Dadurch sind hohe Abtastfrequenzen von beispielsweise 400 Hz mit vertretbarem Rechneraufwand möglich.

Der Messrechner nimmt in an sich bekannter Weise Fahrparameter, wie Geschwindigkeit, Gierrate, Wankwinkel usw. auf und wertet sie aus. Diesen Messdaten werden vorteilhafterweise ebenfalls Zeitmarken zugefügt.

Durch die Busverbindung kann ein integriertes Gesamtsystem geschaffen werden, das flexibel nutzbar ist.

Je nach bedarf können die Daten digital oder nach entsprechender Wandlung analog zur Verfügung gestellt werden.

Die Bildauswertung muss nicht zwingend online erfolgen, sondern kann offline erfolgen, wobei bekannte Verfahren der dreidimensionalen Bildauswertung eingesetzt werden und mit Low- oder Highspeed CAMs gearbeitet werden kann. Die Bildauswertung kann über Zwischenspeicherschritte erfolgen. Desweiteren müssen nicht zwingend elektronische Kameras verwendet werden ; es können auch Filmkameras verwendet werden, deren Bilder anschließend ausgewertet werden, wobei dieses Verfahren allerdings umständlich und zeitraubend ist.

Die Kameras müssen nicht senkrecht zueinander angeordnet sein; wichtig ist, dass ihre Abbildungsrichtungen verschieden sind, damit aus zwei zweidimensionalen Bildern dreidimensionale Koordinaten erzeugt werden können.

### Bezugszeichenliste

- 2: Fahrzeugrad
- 4: Messkörper
- 6: Achsschenkel
- 8: Radträger
- 10: Lenker
- 12: Rahmenteil
- 14: Kugel
- 16: Kugel
- 18: Stab
- 19: Karosserie
- 20: Kamera
- 22: Kamera
- 24: Datenleitung
- 26: Datenleitung
- 28: Computer
- 28₁: Steuergerät
- 28₂: Messrechner
- 30: Eingang
- 32: Fahrzustandssensor
- 34: Ausgang
- 36: Bus

## Patentansprüche

1. Verfahren zum Erfassen der Position eines Fahrzeugrades in einem fahrzugfesten Bezugssystem, enthaltend folgende Schritte:
- starres Befestigen eines Messkörpers (4) an dem Fahrzeugrad (2), welcher Messkörper zwei in Richtung der Drehachse (A-A) des Fahrzeugrades voneinander beabstandete Erfassungselemente (14,16) aufweist, die derart geformt sind, dass der Flächenschwerpunkt ihrer die Drehachse enthaltenden Schnittflächen auf der Drehachse liegt,
- Erfassen der Positionen der Erfassungselemente durch deren Abbildung auf zwei fahrzeugfeste, in vorbestimmter Weise relativ zum Fahrzeug festliegende und winkelig zueinander angeordnete Abbildungsflächen,
- Berechnen der Positionen der Erfassungselemente in einem fahrzeugfesten Bezugssystem aus deren Positionen auf den Abbildungsflächen und
- Berechnen der Position des Fahrzeugrades aus der konstanten geometrischen Beziehung zwischen den Erfassungselementen und dem Fahrzeugrad.

2. Vorrichtung zum Erfassen der Position eines Fahrzeugrades in einem fahrzeugfesten Bezugssystem, enthaltend
- einen starr an dem Fahrzeugrad (2) befestigten Messkörper (4) mit zwei in Richtung der Drehachse des Fahrzeugrades voneinander beabstandeten Erfassungselementen (14, 16), die derart geformt sind, dass die Flächenschwerpunkte ihrer die Drehachse enthaltenden Schnittflächen auf der Drehachse liegen,
- eine Positionserfassungseinrichtung (20, 22), die die Erfassungselemente auf zwei fahrzeugfeste, in vorbestimmter Weise relativ zum Fahrzeug festliegende und winkelig zueinander angeordneter Abbildungsflächen abbildet, und
- eine Berechnungseinrichtung (28), die aus den Positionen der Erfassungselemente auf den Abbildungsflächen und der konstanten geometrischen Beziehung zwischen den Erfassungselementen und dem Fahrzeugrad dessen Position in dem fahrzeugfesten Bezugssystem berechnet.

3. Vorrichtung nach Anspruch 2, wobei der Messkörper (4) als Erfassungselemente zwei voneinander beabstandete Kugeln (14, 16) enthält.

4. Vorrichtung nach Anspruch 2 oder 3, wobei die Positionserfassungseinrichtung durch zwei starr am Fahrzeug angebrachte elektronische Kameras (20, 22) gebildet ist, die den Messkörper aus unterschiedlichen Richtungen erfassen.

5. Vorrichtung nach Anspruch 4, wobei die eine Kamera (20) etwa senkrecht über der Drehachse (A-A) des Fahrzeugrades (2) und die andere Kamera (22) in einer die Drehachse enthaltenden, etwa waagerechten Ebene angebracht ist.

6. Vorrichtung nach einem der Ansprüche 4 oder 5, wobei die Berechnungseinrichtung ein mit den elektronischen Kameras verbundener Computer (28) ist, der einen mit wenigstens einem Fahrzustandssensor (32) verbundenen Eingang (30) aufweist.

## Claims

1. Method for detecting the position of a vehicle wheel in a reference system linked to the vehicle, containing the following steps:
- rigid fastening of a measurement body (4) to the vehicle wheel (2), which measurement body has two detecting elements (14, 16) which are spaced apart from each other in the direction of the axis of rotation (A-A) of the vehicle wheel and are shaped in such a manner that the area centre of gravity of their sectional areas containing the axis of rotation lies on the axis of rotation,
- detecting the positions of the detecting elements by the imaging thereof onto two imaging surfaces which are linked to the vehicle, are secured in a predetermined manner relative to the vehicle and are arranged at an angle to each other,
- calculating the positions of the detecting elements in a reference system linked to the vehicle from their positions on the imaging surfaces, and
- calculating the position of the vehicle wheel from the constant geometrical relationship between the detecting elements and the vehicle wheel.

2. Device for detecting the position of a vehicle wheel in a reference system linked to the vehicle, containing
- a measurement body (4) which is fastened rigidly to the vehicle wheel (2) and has two detecting elements (14, 16) which are spaced apart from each other in the direction of the axis of rotation of the vehicle wheel and are shaped in such a manner that the area centres of gravity of their sectional areas containing the axis of rotation lie on the axis of rotation,
- a position-detecting device (20, 22) which images the detecting elements onto two imaging surfaces which are linked to the vehicle, are secured in a predetermined manner relative to the vehicle and are arranged at an angle to each other, and
- a calculating device (28) which calculates the position of the vehicle wheel in the reference system, which is linked to the vehicle, from the positions of the detecting elements on the imaging surfaces and the constant geometrical relationship between the detecting elements and the vehicle wheel.

3. Device according to Claim 2, the measurement body (4) containing as detecting elements two spheres (14, 16) which are spaced apart from each other.

4. Device according to Claim 2 or 3, the position-detecting device being formed by two electronic cameras (20, 22) which are fitted rigidly on the vehicle and detect the measurement body from different directions.

5. Device according to Claim 4, the one camera (20) being fitted approximately vertically above the axis of rotation (A-A) of the vehicle wheel (2) and the other camera (22) being fitted in an approximately horizontal plane containing the axis of rotation.

6. Device according to either of Claims 4 and 5, the calculating device being a computer (28) which is connected to the electronic cameras and has an input (30) connected to at least one driving-state sensor (32).

## Revendications

1. Procédé pour détecter la position d'une roue de véhicule dans un système de référence lié au véhicule, comprenant les étapes suivantes:
- fixation rigide d'un corps de mesure (4) sur la roue de véhicule (2), lequel corps de mesure comporte deux éléments de détection (14, 16) distants l'un de l'autre dans la direction de l'axe de rotation (A-A) de la roue de véhicule et qui sont réalisés de telle sorte que le barycentre de leurs surfaces de coupe, contenant l'axe de rotation, est situé sur l'axe de rotation,
- détection des positions des éléments de détection par formation de leur image sur deux surfaces d'imagerie solidaires du véhicule, qui sont fixées d'une manière prédéterminée par rapport au véhicule et sont disposées angulairement l'une par rapport à l'autre,
- calcul des positions des éléments de détection dans un système de référence lié au véhicule, à partir de leurs positions sur les surfaces d'imagerie, et
- calcul de la position de la roue de véhicule à partir de la relation géométrique constante entre les éléments de détection et la roue de véhicule.

2. Dispositif pour détecter la position d'une roue de véhicule dans un système de référence lié au véhicule contenant
- un corps de mesure (4) fixé de façon rigide à la roue de véhicule (2) et comportant deux éléments de détection (14, 16), qui sont distants l'un de l'autre dans la direction de l'axe de rotation de la roue de véhicule et sont réalisés de telle sorte que les barycentres de leurs surfaces de coupe, contenant l'axe de rotation, sont situés sur l'axe de rotation,
- un dispositif de détection de position (20, 22), qui forme l'image des éléments de détection sur deux surfaces d'imagerie liées au véhicule, fixées d'une manière prédéterminée par rapport au véhicule et disposées angulairement l'une par rapport à l'autre, et
- un dispositif de calcul (28) qui, à partir des positions des éléments de détection sur les surfaces d'imagerie et de la relation géométrique constante entre les éléments de détection et la roue de véhicule, calcule la position de cette roue dans le système de référence lié au véhicule.

3. Dispositif selon la revendication 2, dans lequel le corps de mesure (4) contient comme éléments de détection deux billes (14, 16) distantes l'une de l'autre.

4. Dispositif selon la revendication 2 ou 3, dans lequel le dispositif de détection de position est formé par deux caméras électroniques (20, 22) montées rigidement dans le véhicule et qui détectent le corps de mesure dans des directions différentes.

5. Dispositif selon la revendication 4, dans lequel la première caméra (20) est montée approximativement verticalement au-dessus de l'axe de rotation (A-A) de la roue de véhicule (2), et l'autre caméra (22) est montée dans un plan approximativement horizontal, qui contient l'axe de rotation.

6. Dispositif selon l'une des revendications 4 ou 5, dans lequel le dispositif de calcul comporte un ordinateur (28), qui est relié aux caméras électroniques et possède une entrée (30) reliée à au moins un détecteur d'état de déplacement (32).
